(19) **Europäisches Patentamt**
**European Patent Office**
**Office européen des brevets**

(11) **EP 1 880 095 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(21) Anmeldenummer: 05742888.0

(22) Anmeldetag: **13.05.2005**

(51) Int Cl.:
*F02D 13/04* *(2006.01)*    *F01L 13/06* *(2006.01)*
*F02B 37/24* *(2006.01)*

(86) Internationale Anmeldenummer:
**PCT/EP2005/005227**

(87) Internationale Veröffentlichungsnummer:
**WO 2006/122570 (23.11.2006 Gazette 2006/47)**

(54) **ZWEITAKT-MOTORBREMSVERFAHREN FÜR EINE AUFGELADENE BRENNKRAFTMASCHINE**

TWO-STROKE ENGINE BRAKING PROCESS FOR A SUPERCHARGED INTERNAL COMBUSTION ENGINE

PROCESSUS DE FREINAGE MOTEUR A DEUX TEMPS POUR UN MOTEUR A COMBUSTION INTERNE SURALIMENTE

(84) Benannte Vertragsstaaten:
**DE FR GB IT**

(43) Veröffentlichungstag der Anmeldung:
**23.01.2008 Patentblatt 2008/04**

(73) Patentinhaber: **Daimler AG**
**70327 Stuttgart (DE)**

(72) Erfinder:
• **BENZ, Michael**
**73760 Ostfildern (DE)**
• **KRÄTSCHMER, Stephan**
**73527 Schwäbisch Gmünd (DE)**

• **SCHMIDT, Erwin**
**73666 Baltmannsweiler (DE)**
• **STADELMAIER, Alexander**
**73529 Schwäbisch Gmünd (DE)**
• **SUMSER, Siegfried**
**70327 Stuttgart (DE)**

(56) Entgegenhaltungen:
WO-A-20/04059131    DE-A1- 10 317 515
DE-A1- 19 853 360    US-A- 4 981 119
US-A- 5 117 790    US-A- 5 537 976
US-A- 5 680 841    US-A1- 2002 162 530
US-B1- 6 256 991    US-B1- 6 293 248

## Beschreibung

Die Erfindung bezieht sich auf ein Motorbremsverfahren für eine aufgeladene Brennkraftmaschine.

Ein Motorbremsverfahren ist aus der DE 196 37 999 A1 bekannt. Die Brennkraftmaschine ist mit einem Abgasturbolader ausgestattet, dessen Abgasturbine mit einer variablen Turbinengeometrie zur veränderlichen Einstellung des wirksamen Turbineneintrittsquerschnittes versehen ist. Zum Erreichen hoher Motorbremsleistungen wird die variable Turbinengeometrie in eine den Querschnitt reduzierende Stauposition verstellt, wodurch der Abgasgegendruck zwischen den Zylinderauslässen und der Abgasturbine ansteigt. Über einen Regler in der Brennkraftmaschine wird die Motorbremsleistung als Funktion von aktuellen Motor- und Betriebsgrößen sowie der Fahrervorgabe durch Variierung der Öffnungskurve eines Drosselventils an den Zylindern eingeregelt. Dieses Drosselventil öffnet gegen Ende des Kompressionstaktes und behält seine Öffnungsposition bis zum Ende des Expansionstaktes bei, wohingegen während des Einlasstaktes das Drosselventil geschlossen bleibt. Das Motorbremsverfahren ist als Viertakt-Verfahren ausgeführt, bei dem die Kolben in den Zylindern Ausschubarbeit gegen den Abgasgegendruck ausüben müssen.

Aus der US 6,293,248 B1 ist ein Zweittakt-Motorbremsverfahren für eine aufgeladene Brennkraftmaschine bekannt. Bei diesem Bremsverfahren wird unter Ladedruck stehende Verbrennungsluft durch Steuerung von Ladungswechselventilen, also von Einlass- und Auslassventilen den Zylindern zugeführt, dort verdichtet und anschließend in den Abgasstrang abgeblasen. Dies erfolgt in der Weise, dass kurz vor Erreichen des oberen Totpunktes das Auslassventil geöffnet und nach Überschreitung des oberen Totpunktes wieder geschlossen wird. Vor dem Schließen des Auslassventiles wird im Expansionstakt das Einlassventil geöffnet, so dass während einer Überschneidungsphase sowohl das Einlassventil als auch das Auslassventil geöffnet sind. Das Einlassventil bleibt während eines verhältnismäßig langen Kurbelwinkelbereiches geöffnet, und zwar über den unteren Totpunkt hinausgehend bis in einen mittleren Hubbereich des Kompressionstaktes. Erst annähernd in der Mitte zwischen unterem und oberem Totpunkt wird das Einlassventil während des Kompressionstaktes geschlossen, so dass auch erst im Anschluss daran alle Ventile geschlossen sind und der maximale Druckaufbau im Zylinderinnenraum erfolgen kann. Der Winkelbereich, in welchem während des Kompressionstaktes sämtliche Ventile geschlossen sind, ist aber aufgrund des späten Einlass-Schließt-Zeitpunktes und des bereits kurz darauf folgenden Auslass-Öffnet-Zeitpunktes auf einen verhältnismäßig kleinen Kurbelwinkelbereich beschränkt. Dementsprechend kann nur ein niedriger maximaler Druck aufgebaut werden.

Von diesem Stand der Technik ausgehend liegt der Erfindung das Problem zugrunde, ein Motorbremsverfahren für eine aufgeladene Brennkraftmaschine anzugeben, mit dem hohe Bremsleistungen bei zugleich verhältnismäßig geringen mechanischen und thermischen Belastungen realisierbar sind.

Dieses Problem wird erfindungsgemäß mit den Merkmalen des Anspruches 1 gelöst. Die Unteransprüche geben zweckmäßige Weiterbildungen an.

Das Motorbremsverfahren ist als Zweitaktverfahren ausgebildet, bei dem im Expansionstakt der Zylinder vor dem Erreichen des unteren Totpunktes das Einlassventil geöffnet und nach dem Überschreiten des unteren Totpunktes wieder geschlossen wird. Im unmittelbar darauf folgenden Kompressionstakt wird vor dem Erreichen des oberen Totpunktes das Auslassventil geöffnet, das nach dem Überschreiten des oberen Totpunktes wieder geschlossen wird.

Das Zweitaktverfahren führt im Vergleich zum Viertaktverfahren im Motorbremsbetrieb zu deutlichen geringeren Belastungen der Bauteile der Brennkraftmaschine, da im Zweitaktverfahren im Motorbremsbetrieb ein höherer Massenstrom durch die Brennkraftmaschine durchgesetzt wird, was bei vergleichbaren Motorbremsleistungen mit geringeren Turbineneintrittsdrücken und Turbineneintrittstemperaturen im Abgasstrang einhergeht. Aufgrund der reduzierten Belastung sind höhere Motorbremsleistungen als im Viertakt-Motorbremsbetrieb möglich. Mit dem vorgeschlagenen Motorbremsverfahren im Zweitaktbetrieb werden nicht nur die mit den durchgesetzten Gasen direkt in Verbindung stehenden Bauteile in der Brennkraftmaschine entlastet, sondern es wird auch der Verschleiß der Radbremse reduziert, da ein höherer Bremsleistungsanteil von der Motorbremse übernommen werden kann und die Radbremse entlastet wird.

Die gesteigerte Motorluftmenge, die die Brennkraftmaschine im Zweitakt-Bremsbetrieb durchsetzen kann, führt auch zu einer Entschärfung des Problems des Verdichterpumpens bei hohen spezifischen Bremsleistungen. Im Verdichterkennfeld weist die Motorbremslinie der Zweitakt-Bremsung bei vergleichbaren Motorbremsleistungen einen größeren Abstand zur Pumpgrenze auf als die Motorbremslinie der Viertaktbremsung. Eine weitere Reduzierung der Pumpgefahr lässt sich trotz höherer Motorbremsleistung durch ein Schließen des Auslassventils noch vor dem Öffnen des Einlassventils realisieren.

In der Zweitakt-Motorbremsphase wird zur Ansaugung der durch das Auflageaggregat bereitgestellten, üblicherweise hoch komprimierten Verbrennungsluft das Einlassventil am Zylinder geöffnet, sobald der Kolben in den Bereich des unteren Totpunktes gelangt. Nach dem Überfahren des unteren Totpunktes wird das Einlassventil wieder in Schließposition verstellt, der entsprechende Zylinder befindet sich nun in der Kompressionsphase, in der üblicherweise alle Ventile geschlossen sind. Mit Annäherung an den oberen Totpunkt wird das Auslassventil geöffnet, wodurch als Folge des hohen Zylinderinnendrucks die komprimierte Luft in sehr kurzer Zeit in den Abgasstrang abgeblasen wird. Nach dem Überschreiten des oberen Totpunktes, also während des Expansionstaktes, wird das Auslassventil wieder geschlossen. Damit ist ein vollständiger Arbeitstakt abgeschlossen.

Zweckmäßig liegen der Öffnungszeitpunkt sowie der Schließzeitpunkt des Einlassventils in einem Kurbelwinkelbereich von 30° vor bzw. nach dem unteren Totpunkt, wobei selbstverständlich auch kleinere Winkelwerte in Betracht kommen, wodurch der Öffnungs- bzw. Schließzeitpunkt des Einlassventils weiter an den unteren Totpunkt angenähert wird. In dieser Phase herrscht der geringste Zylinderinnendruck, was ein Einströmen von komprimierter Verbrennungsluft aus dem Ansaugtrakt begünstigt.

Gemäß einer alternativen Ausführung kann es aber auch zweckmäßig sein, den Einlass-Öffnet-Zeitpunkt in einem größeren Winkelabstand zum unteren Totpunkt vorzusehen und insbesondere im laufenden Betrieb des Motorbremsverfahrens als Funktion von Motorzustands- und Betriebsgrößen sowie als Funktion der Fahrervorgabe veränderlich einzustellen.

Der Öffnungszeitpunkt des Auslassventils liegt zweckmäßig innerhalb eines 30°-Kurbelwinkelbereichs vor dem oberem Totpunkt. Im oberen Totpunkt ist der Zylinderinnendruck am höchsten, wobei ein Öffnen des Auslassventils kurz vor Erreichen des oberen Totpunktes den für die Abblasung günstigen hohen Zylinderinnendruck mit der Ausschubbewegung des Kolbens verbindet. Auch im Fall des Auslassventils kommen kleinere Winkelabstände zum oberen Totpunkt in Betracht, so z. B. ein Winkelabstand von 5° oder 10° vor dem Erreichen des oberen Totpunktes.

Der Auslass-Schließt-Zeitpunkt des Auslassventils liegt gemäß einer ersten, vorteilhaften Ausführung noch vor dem Einlass-Öffnet-Zeitpunkt des Einlassventils, so dass während einer kurzen Zeitspanne vor dem Öffnen des Einlassventils sämtliche Ladungswechselventile geschlossen sind und ein Überströmen von Gas insbesondere aus dem Abgasstrang über den Zylinderinnenraum zurück in den Ansaugtrakt verhindert wird.

Gemäß einer weiteren, vorteilhaften Ausführung wird eine Rezirkulation des Gases aus dem Abgasstrang zurück in den Ansaugtrakt über eine sogenannte innere, den Weg über den Zylinder nehmende Rückführung gewählt, um beispielsweise auf diese Art und Weise die Motorbremsleistung zu beeinflussen oder auch den Abgasgegendruck abzubauen.

Bei dem Auslassventil, welches im Zweitakt-Motorbremsverfahren geöffnet und geschlossen wird, handelt es sich vorteilhaft um das reguläre Auslass-Ladungswechselventil, welches auch in der befeuerten Antriebs-Betriebsweise der Brennkraftmaschine eingesetzt wird. In einer alternativen Ausführung kann es sich bei dem Auslassventil aber auch um ein separates Bremsventil handeln, welches zusätzlich vorgesehen ist, wobei ein derartiges zusätzliches Bremsventil kleinbauend mit einer entsprechend geringen Masse ausgeführt werden kann.

Weitere Vorteile und zweckmäßige Ausführungen sind den weiteren Ansprüchen, der Figurenbeschreibung und den Zeichnungen zu entnehmen. Es zeigen:

Fig. 1    eine schematische Darstellung einer Brennkraftmaschine mit Abgasturbolader, mit einem Zylinder der Brennkraftmaschine in vergrößerter Ansicht einschließlich der Ladungswechselventile und Bremsventile an diesem Zylinder,

Fig. 2    ein Verdichterkennfeld für den Verdichter des Abgasturboladers, mit eingezeichneten Motorbremsleistungslinien für eine Viertakt-Bremsung und eine Zweitakt-Bremsung,

Fig. 3    ein Phasendiagramm mit den Öffnet- und SchließtZeitpunkten der Ladungswechselventile, dargestellt für die Zweitakt-Bremsung,

Fig. 4    eine Fig. 3 entsprechende Darstellung, jedoch mit einer zusätzlichen Eintragung für ein Bremsventil,

Fig. 5    ein Phasendiagramm für eine Zweitakt-Bremsung in einer Variante, gemäß der die Einlass-Öffnet-Zeitpunkte veränderlich einstellbar sind,

Fig. 6    eine Fig. 5 entsprechende Darstellung, jedoch mit einer zusätzlichen Eintragung für ein Bremsventil.

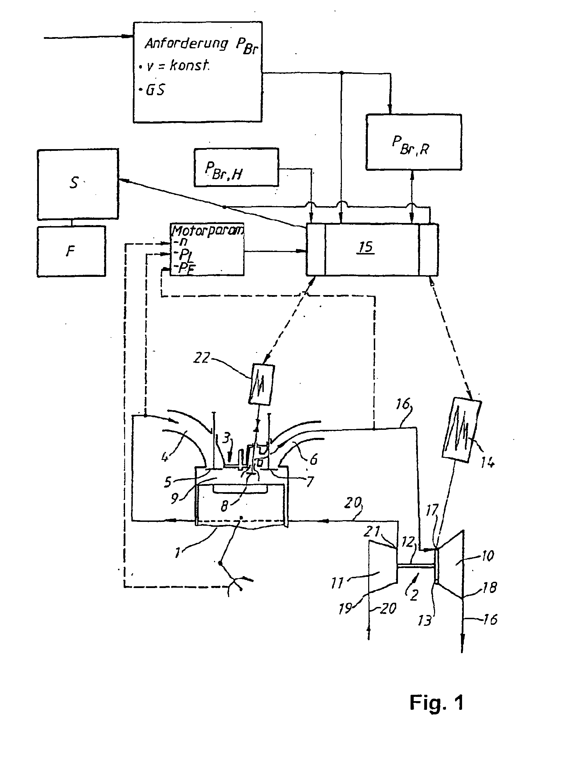

Bei der in Fig. 1 in schematischer Darstellung gezeigten Brennkraftmaschine ist ein Zylinder 1 mit Ladungswechselventilen 5, 7 im Zylinderkopf 3 dargestellt. Der Brennkraftmaschine ist ein Abgasturbolader 2 zugeordnet, der eine Abgasturbine 10 in der Abgasleitung 16 der Brennkraftmaschine sowie einen Verdichter 11 im Ansaugtrakt 20 umfasst, wobei das Turbinenrad über eine Welle 12 mit dem Verdichterrad drehgekoppelt ist. Die Abgasturbine 10 ist mit einer variablen Turbinengeometrie 13 zur veränderlichen Einstellung des wirksamen Turbineneintrittsquerschnittes ausgestattet, wobei die variable Turbinengeometrie über einen Aktuator 14 zu verstellen ist.

Die Verbrennungsluft wird im Ansaugtrakt 20 zunächst über den Verdichtereintritt 19 dem Verdichterrad im Verdichter 11 zugeführt, erfährt dort eine Verdichtung und tritt über den Verdichteraustritt 21 in den Zylindereingang ein. Über einen Einlasskanal 4 der Brennkraftmaschine wird die komprimierte Verbrennungsluft bei geöffnetem Einlassventil 5 dem Brennraum 9 im Zylinder 1 zugeführt. Nach der erfolgten Verbrennung werden die Gase im Brennraum 9 über das geöffnete Auslassventil 7 in einen Abgaskrümmer 6 und von dort weiter in die Abgasleitung 16 abgeführt. Die Abgase münden über den Turbineneintritt 17 in die Abgasturbine 10 und treiben dort das Turbinenrad an. Über den Turbinenaustritt 18 verlassen die entspannten Abgase die Abgasturbine.

Dem Zylinder 1 ist zusätzlich zu den Ladungswechselventilen ein Bremsventil 8 zugeordnet, welches in Öffnungsposition ebenso wie das Auslassventil 7 den Brennraum 9 mit dem Abgaskrümmer 6 verbindet. Die Hubkurve des Bremsventils 8 ist über einen Aktuator 22 frei einstellbar. Auch die übrigen Ladungswechselventile 5 und 7 sind über entsprechende Aktuatoren frei einstellbar. Die Einstellung erfolgt über Stellsignale einer Regel- und Steuereinheit 15, in der sämtliche Motorzustands- und Betriebsgrößen und auch Anforderungen des Fahrers verarbeitet und alle einzustellenden Aggregate eingestellt werden, unter anderem auch der Aktuator 14 für die variable Turbinengeometrie 13.

Die Einstellung über die Regel- und Steuereinheit 15 erfolgt insbesondere in Abhängigkeit von der Drehzahl n der Brennkraftmaschine, dem Ladedruck $p_L$ im Einlasskanal 4 und dem Turbineneintrittsdruck $p_E$ am Turbineneintritt 17. Weitere Einflussgrößen sind die Bremsleistungsanforderungen $P_{BR}$ der mechanischen Radbremse $P_{BR,R}$ und der Handbremse $P_{BR,A}$ sowie als Eingangssignale die Fahrgeschwindigkeit v und gegebenenfalls ein eine Gefahrensituation kennzeichnendes Gefahrensignal GS. Des Weiteren kann, wie in dem Block S dargestellt, eine Sicherheitsüberprüfung der Funktion des Bremsventils 8 durchgeführt werden, wobei im Falle einer erkannten Fehlfunktion ein Fehlersignal F erzeugt wird, welches dem Fahrer zur Anzeige gebracht wird.

Im Motorbremsbetrieb wird die gewünschte Bremsleistung soweit wie möglich über die Motorbremse generiert. Überschreitet die Bremsleistungsanforderung, welche vom Fahrer und/oder automatisiert über die Regel- und Steuereinheit angefordert wird, die momentan erzeugbare maximale Motorbremsleistung, so wird die Radbremse selbsttätig zugeschaltet. Die Aufteilung der Bremsleistung zwischen Motorbremse und Radbremse erfolgt üblicherweise ohne Fahrereinfluss allein über die Regel- und Steuereinheit 15.

Die Motorbremsleistung kann im Wege einer Viertakt-Bremsung oder einer Zweitakt-Bremsung erzeugt werden. Bei der Viertakt-Bremsung wird im Einlasstakt in der Nähe des oberen Totpunktes das Einlassventil 5 geöffnet, wodurch verdichtete Verbrennungsluft über den Einlasskanal 4 in den Brennraum 9 einströmen kann. Anschließend erfolgen die Kompressions- und Expansionstakte und danach der Auslasstakt, bei dem das Auslassventil 7 oder das Bremsventil 8 - gegebenenfalls auch beide Ventile - geöffnet werden, so dass der Brennrauminhalt über den Abgaskrümmer 6 in die Abgasleitung 16 abgeleitet werden kann. Zugleich steht zweckmäßig die variable Turbinengeometrie 13 in einer den wirksamen Turbineneintrittsquerschnitt minimierenden Stauposition, was den Aufbau eines erhöhten Abgasgegendrucks begünstigt, gegen den Ausschubarbeit geleistet werden muss. Über die verbleibenden freien Strömungsquerschnitte der variablen Turbinengeometrie 13 strömt das unter hohem Druck stehende Gas auf das Turbinenrad und treibt dieses an, woraufhin im Verdichter Kompressionsarbeit geleistet und angesaugte Verbrennungsluft auf einen erhöhten Ladedruck verdichtet wird, unter dem die Verbrennungsluft den Zylinder zugeführt wird.

Bei der Zweitakt-Bremsung wird dagegen im Expansionstakt der Zylinder das Einlassventil 5 geöffnet und im unmittelbar darauf folgenden Kompressionstakt eines der Auslassventile 7, 8 zum Abführen des komprimierten Gases in die Abgasleitung geöffnet. Auch bei der Zweitakt-Bremsung steht die variable Turbinengeometrie in der Abgasturbine 10 in Stauposition.

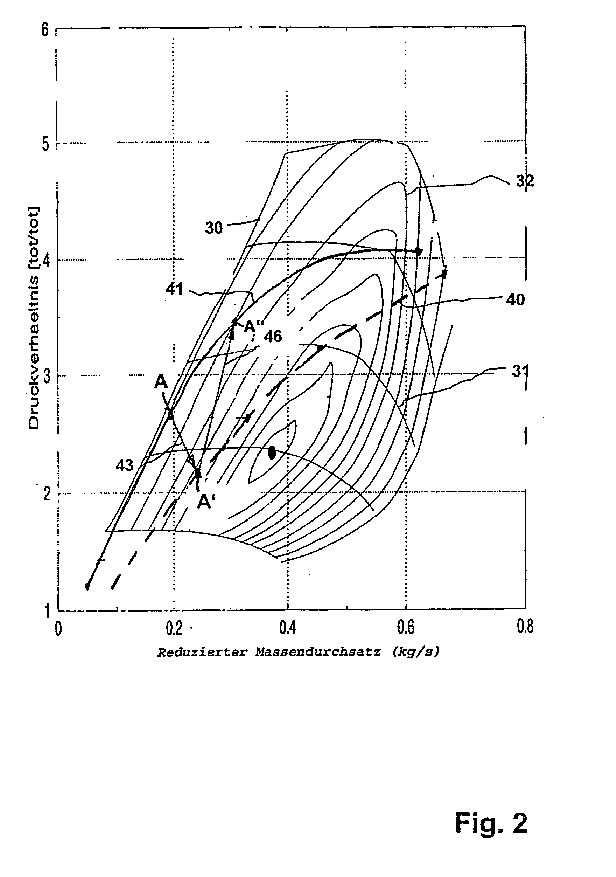

In Fig. 2 ist das Verdichterkennfeld für den Verdichter des Abgasturboladers dargestellt. Auf der Abszisse des Kennfeldes ist der reduzierte Massendurchsatz durch den Verdichter eingetragen, die Ordinate zeigt das Totaldruckverhältnis des Verdichters. In Richtung kleiner Massendurchsätze ist das Verdichterkennfeld seitlich von einer Pumpgrenze 30 begrenzt. Des Weiteren sind Drehzahllinien und Wirkungsgradlinien 32 eingetragen, die jeweils Isolinien gleicher Werte darstellen.

Die Kennlinie 40 für die Zweitakt-Bremsung und die Kennlinie 41 für die Viertakt-Bremsung stellen vergleichbare Motorbremsleistungskurven dar. Wie Fig. 2 zu entnehmen, ist jedoch die Kennlinie 40 für die Zweitakt-Bremsung zu Gunsten erhöhter Massendurchsätze bei zugleich geringerem Totaldruckverhältnis im Vergleich zur Kennlinie 41 für die Viertakt-Bremsung verschoben. Dies bedeutet, dass bei der Zweitakt-Bremsung bei gleicher Motor-Bremsleistung geringere Drücke und Temperaturen entstehen als bei der Viertakt-Bremsung, wodurch die Bauteilbelastung reduziert ist. Die Kennlinie 40 für die Zweitakt-Bremsung weist im Vergleich zur Kennlinie 41 einen deutlich größeren Abstand zur Pumpgrenze 30 auf, so dass bei der Zweitakt-Bremsung die Gefahr des Verdichterpumpens erheblich reduziert ist.

Die geringeren Drücke und Temperaturen bei der Zweitakt-Bremsung wirken sich auch vorteilhaft auf die Abgasturbine aus, da an der Abgasturbine geringere Eintrittsdrücken und Eintrittstemperaturen herrschen.

In Fig. 2 sind als Beispiel für gleiche Bremsleistungen die Punkte A für den Viertakt-Bremsbetrieb und A' für den Zweitakt-Bremsbetrieb eingetragen. Wie zu erkennen, geht der Übergang von A zu A' gemäß Pfeil 43, also der Übergang von der Viertakt-Bremsung zur Zweitakt-Bremsung mit einer erheblichen Absenkung des Druckverhältnisses bei einem zugleich geringfügigen Anstieg des Massendurchsatzes durch den Verdichter einher. Mit Pfeil 46 ist der Übergang vom Bremsleistungspunkt A' der Zweitakt-Bremsung zu einem Bremsleistungspunkt A" dargestellt, der bei gleich bleibender Motordrehzahl eine erheblich höhere Bremsleistung im Zweitakt-Bremsverfahren kennzeichnet. Das Steigerungspotenzial an spezifischer Motorbremsleistung im Zweitakt-Bremsbetrieb liegt gegenüber dem Viertakt-Bremsbetrieb in einer Größenordnung über 50%. Die Steigerung von A' auf A" im Zweitakt-Motorbremsbetrieb wird durch Anhebung des Ladedrucks erreicht.

Als Auslegungsregel für die Dimensionierung des eingesetzten Abgasturboladers kann ein Turbobremsfaktor TBF definiert werden, der gemäß der Beziehung

$$TBF \;=\; A_T \;*\; D_T/V_H$$

aus den Parametern $A_T$ (freier Strömungsquerschnitt im Abgasweg zur Turbine bei maximaler Bremsleistung), $D_T$ (Eintrittsdurchmesser des Turbinenrades) und $V_H$ (Hubvolumen der Brennkraftmaschine) ermittelt wird. Der Turbobremsfaktor verknüpft Größenverhältnisse in der Abgasturbine mit dem Hubvolumen $V_H$ der Brennkraftmaschine. Dieser Turbinenbremsfaktor TBF liegt bei Abgasturboladern, die ausschließlich im Motorbremsverfahren im Zweitaktverfahren betrieben werden, bei einem Wert kleiner als 0.0075 (7.5 ‰), wohingegen Abgasturbolader, die im Viertakt-Bremsverfahren betrieben werden, einen Turbobremsfaktor TBF kleiner als 0.005 (5 ‰) aufweisen. Turbobremsfaktoren in dieser Größenordnung stellen jeweils eine optimale Abstimmung zwischen Brennkraftmaschine und Abgasturbine dar.

Der im Vergleich zum Viertakt-Bremsverfahren um 50% höhere Wert des Turbobremsfaktors TBF für das Zweitakt-Bremsverfahren bedeutet, dass Abgasturbinen mit größeren Strömungsquerschnitten und größeren Eintrittsdurchmessern des Turbinenrades verwendet werden können, die eine höhere Motorluftmenge durchsetzen können. Dies führt zu einer Entschärfung des Problems des Verdichterpumpens bei hohen spezifischen Bremsleistungen.

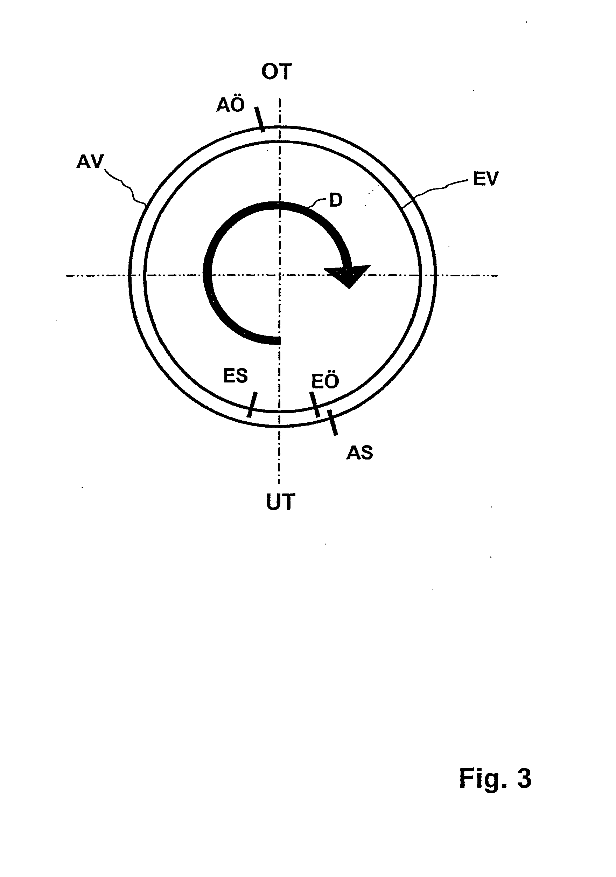

Fig. 3 zeigt das Phasendiagramm für die Öffnungs- und Schließzeitpunkte der Einlass- und Auslassventile am Zylinder im Zweitakt-Motorbremsbetrieb. Dargestellt ist die Einlassventilphase EV für den Kurbelwinkelbereich von 360° und die Auslassventilphase AV, ebenfalls für den Kurbelwinkelbereich über 360°. Die zeitliche Reihenfolge der Öffnungs- und Schließzeitpunkte ist mit Pfeilrichtung D gekennzeichnet.

Das Einlassventil wird im Expansionstakt des Zylinders zum Einlass-Öffnet-Zeitpunkt EÖ kurz vor Erreichen des unteren Totpunktes UT geöffnet, da in dieser Phase der Zylinderinnendruck verhältnismäßig gering ist, was die Zufuhr von unter erhöhtem Ladedruck stehender Verbrennungsluft begünstigt. Der Einlass-Öffnet-Zeitpunkt EÖ liegt etwa 15° vor dem unteren Totpunkt UT.

Etwa 10° bis 15° nach dem Überschreiten des unteren Totpunktes UT wird das Einlassventil zum Zeitpunkt ES wieder geschlossen und der Kolben im Zylinder führt bei geschlossenen Ventilen den Kompressionstakt aus. Kurz vor dem Erreichen des oberen Totpunktes OT wird das Auslassventil zum Auslass-Öffnet-Zeitpunkt AÖ noch während des Kompressionstaktes geöffnet, wobei der Zeitpunkt AÖ weniger als 10° vor dem oberen Totpunkt OT liegt. Das Auslassventil bleibt für einen Zeitraum von annähernd 180° im folgenden Expansionstakt geöffnet und schließt zum Zeitpunkt AS erst unmittelbar vor dem Einlass-Öffnet-Zeitpunkt EÖ. Der Auslass-Schließt-Zeitpunkt AS liegt nur wenige Grad Kurbelwinkel vor dem Einlass-Öffnet-Zeitpunkt EÖ. In dieser Ausführung des Motorbremsverfahrens in der Zweitakt-Bremsung findet keine Überschneidung geöffneter Einlassventile und Auslassventile statt. Dies verhindert eine Rezirkulation der Luft aus dem Motoraustrittstrakt in den Motoransaugtrakt.

Die Öffnung des Austrittsventils zum Zeitpunkt AÖ kurz vor Erreichen des oberen Totpunktes bewirkt aufgrund des zu diesem Zeitpunkt herrschenden hohen Zylinderinnendrucks eine schlagartige Abblasung der im Brennraum komprimierten Luft.

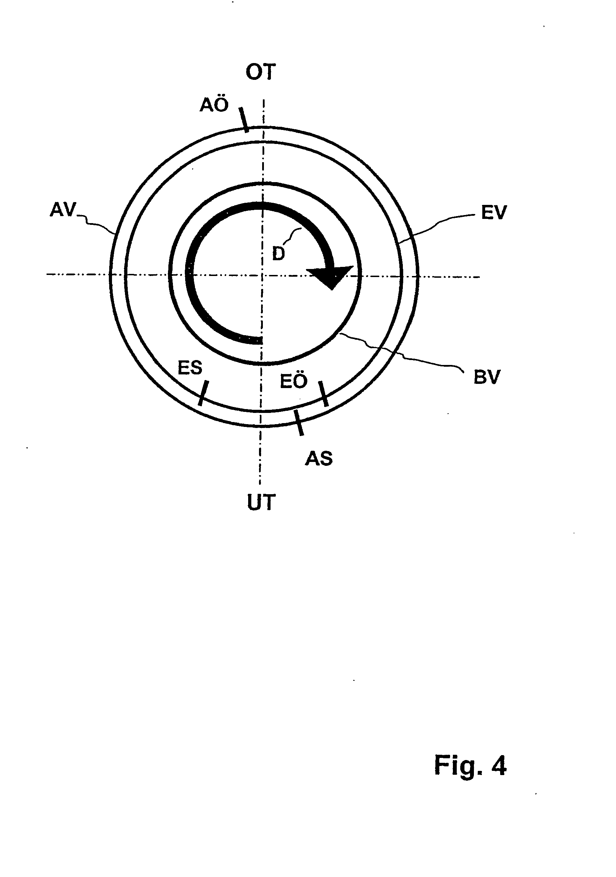

In Fig. 4 ist eine Variante des Verfahrens aus Fig. 3 dargestellt. Der Auslass-Schließt-Zeitpunkt AS liegt zeitlich nach dem Einlass-Öffnet-Zeitpunkt EÖ, so dass im zwischenliegenden Winkelbereich das Einlassventil und das Auslassventil gleichzeitig in Öffnungsposition stehen, wodurch eine Rezirkulation der Luft des Austrittstraktes in den Eintrittstrakt bewirkt wird. Über die Überschneidung des Winkelbereichs zwischen Einlass-Öffnet EÖ und Auslass-Schließt AS kann die Rezirkulationsmenge beeinflusst werden.

Als weitere Möglichkeit der Rezirkulation der Luft des Austrittstraktes in den Eintrittstrakt ist die Bremsventilphase BV dargestellt, die die konstant offene Position des zusätzlich zum Auslassventil vorgesehenen Bremsventils kennzeichnet. Dieses Bremsventil bleibt in der Ausführung nach Fig. 4 permanent geöffnet.

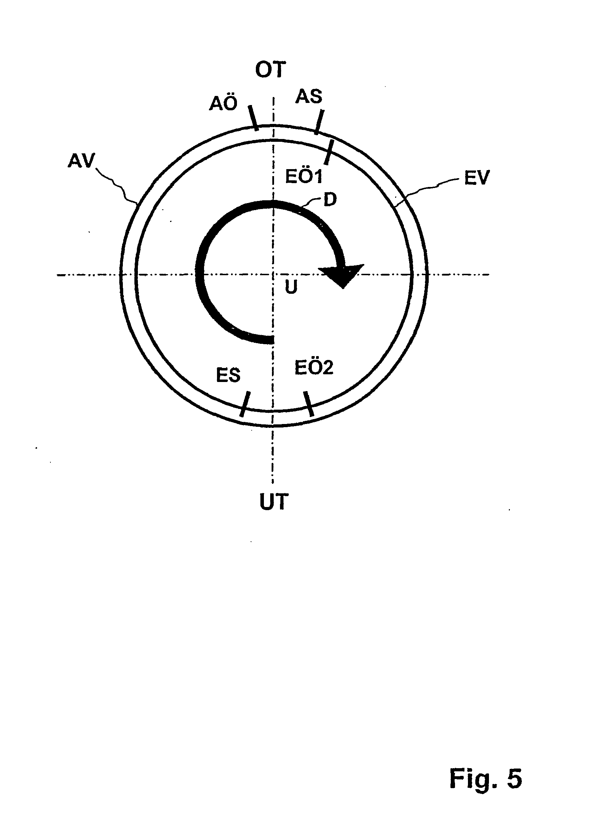

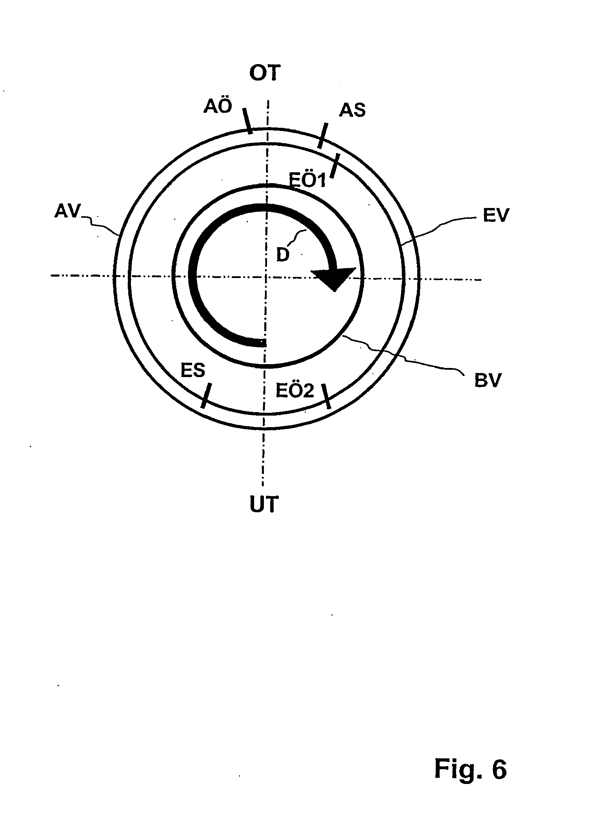

Die Fig. 5 und 6 zeigen Ausführungsbeispiele, bei denen der Einlass-Öffnet-Zeitpunkt des Einlassventiles während des Abwärtshub des Kolbens (Expansionstrakt) bei der Zweitakt-Bremsung in einem verhältnismäßig großen Winkelbereich variiert werden kann, der durch die Grenzwerte EÖ1 und EÖ2 markiert ist. Auch der Schließzeitpunkt AS des Auslassventils ist variabel einstellbar. Der Auslass-Schließt-Zeitpunkt AS und der Einlass-Öffnet-Zeitpunkt EÖ zwischen EÖ1 und EÖ2 werden auf die Erzielung von maximaler Bremsleistung ausgelegt.

Der Auslass-Schließt-Zeitpunkt AS liegt in den Ausführungsbeispielen nach den Fig. 5 und 6 unmittelbar vor dem Einlass-Öffnet-Zeitpunkt EÖ1. Grundsätzlich kann der Auslass-Schließt-Zeitpunkt AS - wie auch in Fig. 4 dargestellt - nach dem Einlass-Öffnet-Zeitpunkt erfolgen, um eine Rezirkulation der Luft aus dem Abgasstrang in den Ansaugtrakt zu erlauben.

Die in Fig. 5 dargestellten Ventilsteuerzeiten für das Einlassventil und das Auslassventil liegen nahezu symmetrisch verteilt in Bezug auf den unteren Totpunkt UT bzw. den oberen Totpunkt OT. Die Öffnungs- und Schließzeitpunkt - im Fall des Einlassventils der spätest mögliche Einlass-Öffnet-Zeitpunkt EÖ2 - liegen innerhalb eines Winkelbereichs von nicht mehr als etwa 20° vor bzw. nach dem oberen bzw. unteren Totpunkt OT bzw. UT.

Fig. 6 unterscheidet sich vom Ausführungsbeispiel nach Fig. 5 dadurch, dass ein zusätzliches Bremsventil dargestellt, dessen Phase mit BV gekennzeichnet ist. Dieses Bremsventil ist analog zum Ausführungsbeispiel nach Fig.

4 permanent geöffnet.

**Patentansprüche**

1. Im Zweitaktverfahren durchzuführendes Motorbremsverfahren für eine aufgeladene Brennkraftmaschine, bei dem unter Ladedruck stehende Verbrennungsluft durch Steuerung von Ladungswechselventilen (5, 7) den Zylindern (1) zugeführt, in den Zylindern (1) verdichtet und anschließend in den Abgasstrang (16) abgeblasen wird, wobei

- im Expansionstakt der Zylinder (1) vor dem Erreichen des unteren Totpunktes (UT) das Einlassventil (5) geöffnet und nach dem Überschreiten des unteren Totpunktes (UT) wieder geschlossen wird,
- im anschließend folgenden Kompressionstakt vor dem Erreichen des oberen Totpunktes (OT) das Auslassventil (7) geöffnet und nach dem Überschreiten des oberen Totpunktes (OT) wieder geschlossen wird, **dadurch gekennzeichnet, dass** der Schließzeitpunkt (ES) des Einlassventils (5) innerhalb eines 30°-Kurbelwinkelbereichs nach dem unteren Totpunkt (UT) liegt.

2. Motorbremsverfahren nach Anspruch 1,
**dadurch gekennzeichnet,**
**dass** der Öffnungszeitpunkt (AÖ) des Auslassventils (7) innerhalb eines 30°-Kurbelwinkelbereichs vor dem oberen Totpunkt (OT) liegt.

3. Motorbremsverfahren nach Anspruch 1 oder 2,
**dadurch gekennzeichnet,**
**dass** der Öffnungszeitpunkt (EÖ) des Einlassventils (5) innerhalb eines 30°-Kurbelwinkelbereichs vor dem unteren Totpunkt (UT) liegt.

4. Motorbremsverfahren nach einem der Ansprüche 1 bis 3,
**dadurch gekennzeichnet,**
**dass** der Öffnungszeitpunkt (EÖ) des Einlassventils in Abhängigkeit der aktuellen Bremsleistungsanforderung zwischen 30° nach dem oberen Totpunkt (OT) und vor Erreichen des unteren Totpunkts (UT) liegt.

5. Motorbremsverfahren nach einem der Ansprüche 1 bis 4,
**dadurch gekennzeichnet,**
**dass** der Schließzeitpunkt (AS) des Auslassventils (7) innerhalb eines 20°-Kurbelwinkelbereichs vor oder nach dem Öffnungszeitpunkt (EÖ) des Einlassventils (5) liegt.

6. Motorbremsverfahren nach einem der Ansprüche 1 bis 5,
**dadurch gekennzeichnet,**
**dass** zusätzlich zu den während des befeuerten Antriebs zu betätigenden Auslassventilen (7) ein in den Abgasstrang (16) der Brennkraftmaschine öffnendes Bremsventil (8) vorgesehen ist.

7. Motorbremsverfahren nach Anspruch 6,
**dadurch gekennzeichnet,**
**dass** die Auslassventile (7) zur Durchführung des Motorbremsverfahrens geöffnet und geschlossen werden und das Bremsventil (8) im Motorbremsbetrieb permanent geöffnet bleibt.

8. Motorbremsverfahren nach einem der Ansprüche 1 bis 7,
**dadurch gekennzeichnet,**
**dass** zur Erhöhung des Abgasgegendrucks eine variable Turbinengeometrie (13) in der Abgasturbine (10) zur veränderlichen Einstellung des wirksamen Turbineneintrittsquerschnitts in Staustellung überführt wird.

9. Motorbremsverfahren nach einem der Ansprüche 1 bis 8,
**dadurch gekennzeichnet,**
**dass** im Zweitakt-Motorbremsverfahren ein auf den Motorbremsbetrieb bei maximaler Bremsleistung bezogener Turbobremsfaktor (TBF) des Abgasturboladers, der gemäß der Beziehung

$$TBF \;=\; A_T \; * \; D_T / V_H$$

aus den Parametern

$A_T$ freier Strömungsquerschnitt im Abgasweg zur Turbine bei maximaler Bremsleistung
$D_T$ Eintrittsdurchmesser des Turbinenrades
$V_H$ Hubvolumen der Brennkraftmaschine

ermittelt wird, einen Wert kleiner als 0.0075 (7.5 ‰) einnimmt:

$$TBF \;<\; 0.0075 \;.$$

10. Motorbremsverfahren nach einem der Ansprüche 1 bis 9,
    **dadurch gekennzeichnet,**
    **dass** in Abhängigkeit von Motorzustands- und Betriebsgrößen zwischen dem Zweitakt-Motorbremsverfahren und einem Viertakt-Motorbremsverfahren umgeschaltet wird.

11. Motorbremsverfahren nach Anspruch 10,
    **dadurch gekennzeichnet,**
    **dass** der Turbobremsfaktor (TBF) des Abgasturboladers im Viertakt-Motorbremsverfahren einen Wert kleiner als 0.005 (5 ‰) einnimmt:

$$TBF \;<\; 0.005 \;.$$

**Claims**

1. Engine braking process to be implemented in two-stroke mode for a supercharged internal combustion engine in which combustion air under boost pressure is fed to the cylinders (1), compressed in the cylinders (1) and then expelled into the exhaust train (16) by means of the control of charge changing valves (5, 7),

   - the inlet valve (5) being opened before reaching bottom dead centre (BDC) and closed again after passing bottom dead centre (BDC) during the expansion stroke of the cylinder (1),
   - the outlet valve (7) being opened before reaching top dead centre (TDC) and closed again after passing top dead centre (TDC) in the subsequent compression stroke,

   **characterised in that**
   the closing point (ES) of the inlet valve (5) lies within a 30° crankshaft angle range after bottom dead centre (BDC).

2. Engine braking process in accordance with claim 1,
   **characterised in that**
   the opening point (AÖ) of the outlet valve (7) lies within a 30° crankshaft angle range before top dead centre (TDC).

3. Engine braking process in accordance with claim 1 or 2,
   **characterised in that**
   the opening point (EÖ) of the inlet valve (5) lies within a 30° crankshaft angle range before top dead centre (TDC).

4. Engine braking process in accordance with one of claims 1 to 3,
   **characterised in that**
   dependent on the braking requirement at a given point in time the opening point (EÖ) of the inlet valve lies between 30° after top dead centre (TDC) and before reaching bottom dead centre (BDC).

5. Engine braking process in accordance with one of claims 1 to 4,
**characterised in that**
the closing point (AS) of the outlet valve (7) lies within a 20° crankshaft angle range before or after the opening point (EÖ) of the inlet valve (5).

6. Engine braking process in accordance with one of claims 1 to 5,
**characterised in that**
in addition to the outlet valves (7) to be actuated during fired operation, a brake valve (8) which opens in the exhaust train (16) of the internal combustion engine is also provided.

7. Engine braking in accordance with claim 6,
**characterised in that**
the outlet valves (7) are opened and closed to effect the engine braking process and the brake valve (8) remains permanently open in engine braking mode.

8. Engine braking process in accordance with one of claims 1 to 7,
**characterised in that**
to increase the exhaust backpressure a variable turbine geometry (13) in the exhaust gas turbine (10) is switched to blocked position for modifiable setting of the effective turbine inlet cross-section.

9. Engine braking process in accordance with one of claims 1 to 8,
**characterised in that**
in the two stroke engine braking process a turbocharger turbo braking factor (TBF) relative to engine braking operation at maximum braking power, which is determined on the basis of the equation:

$$TBF = A_T * D_T/V_H$$

using the following parameters:

$A_T$ free flow cross-section in the exhaust gas path to the turbine at maximum braking power,
$D_T$ inlet diameter of the turbine wheel,
$V_H$ stroke volume of the internal combustion engine,

has a value of less than 0.0075 (7.5 0/00):

$$TBF < 0.0075.$$

10. Engine braking process in accordance with one of claims 1 to 9,
**characterised in that**
the engine is switched between the two-stroke engine braking process and a four-stroke engine braking process dependent on engine status and operating values.

11. Engine braking process in accordance with claim 10,
**characterised in that**
the turbo braking factor (TBF) of the supercharger has a value less than 0.005 (5 0/00):

$$TBF < 0.005.$$

**Revendications**

1. Procédé de freinage moteur à exécuter dans un procédé à deux temps, pour un moteur à combustion interne suralimenté, dans lequel de l'air de combustion sous pression d'admission est amené aux cylindres (1) par la commande de soupapes de mouvement de gaz (5, 7), est comprimé dans les cylindres (1) et ensuite évacué dans la section de gaz d'échappement (16), dans lequel

   - au temps de détente des cylindres (1), avant que le point mort bas (UT) ne soit atteint, la soupape d'entrée (5) est ouverte et refermée après dépassement du point mort bas (UT),
   - au temps de compression consécutif, avant que le point mort haut (OT) ne soit atteint, la soupape de sortie (7) est ouverte et refermée après dépassement du point mort haut (OT),

   **caractérisé en ce que** l'instant de fermeture (ES) de la soupape d'entrée (5) se situe à l'intérieur d'une plage d'angles de vilebrequin de 30° après le point mort bas (UT).

2. Procédé de freinage moteur selon la revendication 1, **caractérisé en ce que** l'instant d'ouverture (AÖ) de la soupape de sortie (7) se situe à l'intérieur d'une plage d'angles de vilebrequin de 30° avant le point mort haut (OT).

3. Procédé de freinage moteur selon la revendication 1 ou 2, **caractérisé en ce que** l'instant d'ouverture (EÖ) de la soupape d'entrée (5) se situe à l'intérieur d'une plage d'angles de vilebrequin de 30° avant le point mort bas (UT).

4. Procédé de freinage moteur selon l'une quelconque des revendications 1 à 3, **caractérisé en ce que** l'instant d'ouverture (EÖ) de la soupape d'entrée se situe en fonction de la demande de puissance de freinage actuelle entre 30° après le point mort haut (OT) et avant l'arrivée au point mort bas (UT).

5. Procédé de freinage moteur selon l'une quelconque des revendications 1 à 4, **caractérisé en ce que** l'instant de fermeture (AS) de la soupape de sortie (7) se situe à l'intérieur d'une plage d'angles de vilebrequin de 20° avant ou après l'instant d'ouverture (EÖ) de la soupape d'entrée (5).

6. Procédé de freinage moteur selon l'une quelconque des revendications 1 à 5, **caractérisé en ce qu'**en plus des soupapes de sortie (7) à actionner pendant l'entraînement chauffé, une soupape de freinage (8) s'ouvrant dans la section de gaz d'échappement (16) du moteur à combustion interne est prévue.

7. Procédé de freinage moteur selon la revendication 6, **caractérisé en ce que** les soupapes de sortie (7) sont ouvertes et fermées pour l'exécution du procédé de freinage moteur et que la soupape de freinage (8) reste ouverte en permanence pendant le fonctionnement de freinage moteur.

8. Procédé de freinage moteur selon l'une quelconque des revendications 1 à 7, **caractérisé en ce que** pour augmenter la contre-pression de gaz d'échappement, une géométrie de turbine variable (13) dans la turbine de gaz d'échappement (10) est amenée dans la position de refoulement pour un réglage variable de la section transversale effective de l'entrée de turbine.

9. Procédé de freinage moteur selon l'une quelconque des revendications 1 à 8, **caractérisé en ce que** dans le procédé de freinage moteur à deux temps un facteur de turbofreinage (TBF) du turbocompresseur à gaz d'échappement, lié au fonctionnement de freinage moteur à puissance de freinage maximale, qui est déterminé selon la relation

$$TBF = A_T * D_T/V_H$$

   à partir des paramètres

   $A_T$ section d'écoulement libre sur le trajet de gaz d'échappement jusqu'à la turbine à puissance de freinage maximale
   $D_T$ diamètre d'entrée dans la roue de turbine
   $V_H$ cylindrée unitaire du moteur à combustion interne

adopte une valeur inférieure à 0,0075 (7,5 ‰) :

$$TBF < 0{,}0075.$$

**10.** Procédé de freinage moteur selon l'une quelconque des revendications 1 à 9, **caractérisé en ce qu'**une commutation est effectuée entre le procédé de freinage moteur à deux temps et un procédé de freinage moteur à quatre temps, en fonction de grandeurs d'état de moteur et de fonctionnement.

**11.** Procédé de freinage moteur selon la revendication 10, **caractérisé en ce que** le facteur de turbofreinage (TBF) du turbocompresseur à gaz d'échappement dans le procédé de freinage moteur à quatre temps adopte une valeur inférieure à 0,005 (5 ‰) :

$$TBF < 0{,}005.$$

**Fig. 1**

11

**Fig. 2**

OT

AÖ

AV

EV

D

ES

EÖ

AS

UT

Fig. 3

Fig. 4

Fig. 5

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19637999 A1
- US 6293248 B1